**Europäisches Patentamt**

**European Patent Office**

**Office européen des brevets**

(19)

(11) Veröffentlichungsnummer: **0 156 018 B1**

# EUROPÄISCHE PATENTSCHRIFT

(12)

(45) Veröffentlichungstag der Patentschrift:
28.10.87

(51) Int. Cl.⁴: **G 21 C 3/62**

(21) Anmeldenummer: **84115381.0**

(22) Anmeldetag: **13.12.84**

(54) **Verfahren zum Herstellen von oxidischen Kernbrennstoffsinterkörpern.**

(30) Priorität: **20.02.84 DE 3406084**

(43) Veröffentlichungstag der Anmeldung:
**02.10.85 Patentblatt 85/40**

(45) Bekanntmachung des Hinweises auf die Patenterteilung:
**28.10.87 Patentblatt 87/44**

(84) Benannte Vertragsstaaten:
**BE DE FR SE**

(56) Entgegenhaltungen:
**DE - C - 3 144 684**
**LU - A - 67 044**

**SPRECHSAAL, Band 109, Nr. 9, 1976, Seiten 510,512,513; A. INZENHOFER: "Der Einfluss von geringen Zusätzen auf die Herstellung und die Eigenschaften von UO2-Keramiken"**

(73) Patentinhaber: **Siemens Aktiengesellschaft Berlin und München, Wittelsbacherplatz 2, D-8000 München 2 (DE)**

(72) Erfinder: **Dörr, Wolfgang, Dr. Dipl.-Phys., von-Weber-Strasse 51, D-8522 Herzogenaurach (DE)**
Erfinder: **Gradel, Gerhard, Dipl.-Ing., Lilienstrasse 23, D-8581 Eckersdorf (DE)**
Erfinder: **Peehs, Martin, Dr. Dipl.-Phys., Falkenstrasse 2, D-8526 Bubenreuth (DE)**

## Beschreibung

Die Erfindung betrifft ein Verfahren zum Herstellen von oxidischen Kernbrennstoffsinterkörpern durch Vermischen von Basispulver aus $UO_2$ oder $UO_2$ und $PuO_2$ und seltenerdoxidhaltigem, d.h. $SE_2O_3$-haltigem, insbesondere $Gd_2O_3$-haltigem Pulver sowie anschliessendes Kompaktieren der Pulvermischung zu Presslingen und Verdichten dieser Presslinge durch Sintern in einer reduzierend wirkenden Gasatmosphäre bei einer Temperatur im Bereich von 1500°C bis 1750°C.

Ein derartiges Verfahren ist aus der EP-A-0 079 031 bekannt. Bei diesem bekannten Verfahren wird $UO_2$-Basispulver zum Kompaktieren verwendet, welches eine spezifische Oberfläche im Bereich von 2 bis 4,5 $m^2/g$ und/oder einen mittleren Kristallitdurchmesser im Bereich von 80 nm bis 250 nm hat.

Mit dem bekannten Verfahren werden oxidische Kernbrennstoffsinterkörper gewonnen, die ein Seltenerdelement (SE), z.B. Gadolinium, als neutronenphysikalisch abbrennbares Neutronengift enthalten und deren Sinterdichte mehr als 93% der theoretisch möglichen Dichte beträgt. In einem in Betrieb befindlichen Kernreaktor setzen diese Kernbrennstoffsinterkörper deshalb verhältnismässig wenig gasförmige oder leicht flüchtige Kernspaltprodukte frei. Brennstäbe, die nach dem bekannten Verfahren gewonnene Kernbrennstoffsinterkörper enthalten, entwickeln also allenfalls einen geringen Überdruck in dem Brennstabhüllrohren. Auch tritt während des Betriebs im Kernreaktor kein Schrumpfen und kein örtliches Überhitzen dieser Kernbrennstoffsinterkörper auf, so dass Brennstabdefekte vermieden werden.

Das bei dem bekannten Verfahren verwendete $UO_2$-Basispulver hat eine verhältnismässig kleine spezifische Oberfläche und/oder einen verhältnismässig grossen mittleren Kristallitdurchmesser. Basispulver mit diesem Eigenschaften kann unmittelbar nach dem sogenannten ADU Verfahren entsprechend «Gmelin Handbuch der anorganischen Chemie, Uran, Ergänzungsband A3, pp 99-101, 1981» gewonnenes, ungranuliertes Urandioxidpulver oder aber nach dem sogenannten AUC-Verfahren entsprechend «Gmelin Handbuch der anorganischen Chemie, Uran, Ergänzungsband A3, pp 101-104, 1981» gewonnenes ungranuliertes Urandioxidpulver sein, das die verhältnismässig kleine spezifische Oberfläche und/oder den verhältnismässig grossen mittleren Kristallitdurchmesser nur durch entsprechend verlängerte Verweilzeit des Pulvers unter Pyrohydrolysebedingungen beim AUC-Verfahren erhalten hat.

Für das bekannte Verfahren zur Verwendung gelangendes $UO_2$-Basispulver wird also von vornherein nach ganz bestimmten Verfahren hergestellt, damit es die erforderliche spezifische Oberfläche und/oder den erforderlichen mittleren Kristallitdurchmesser hat. Anderes $UO_2$-Ausgangspulver, das bereits vorliegt und nicht die richtige spezifische Oberfläche und/oder den richtigen mittleren Kristallitdurchmesser hat, kann beim bekannten Verfahren zu Schwierigkeiten führen.

Der Erfindung liegt die Aufgabe zugrunde, die Verwendung von $UO_2$-Basispulver mit beliebigen Eigenschaften zum Herstellen hochdichter oxidischer, seltenerdoxidhaltiger Kernbrennstoffsinterkörper zu ermöglichen.

Zur Lösung dieser Aufgabe ist ein Verfahren der eingangs erwähnten Art erfindungsgemäss dadurch gekennzeichnet, dass zum Vermischen mit dem Basispulver seltenerdoxidhaltiges Pulver erzeugt wird mit Pulverpartikeln, welche mindestens in einer Oberflächenschicht ein Kristallgitter des Fluorittypus mit der stöchiometrischen Zusammensetzung $(SE_{0,5}, U_{0,5}) O_{2,00}$ aufweisen und/oder beim Sintern erzeugen.

Ein Kristallgitter des Fluorittypus ist in Fig. 3.12 auf Seite 30 aus Olander: Fundamental Aspects of Nuclear Reactor Fuel Elements, TID-26711-P1, 1976, Energy Research and Development Administration (USA), für $UO_2$ dargestellt. Die Sauerstoffionen bilden dort ein einfach kubisches Gitter und die Uranionen ein kubischflächenzentriertes (fcc) Teilgitter. Im Kristallgitter des Fluorittypus der für das erfindungsgemässe Verfahren erzeugten Pulverpartikel nehmen sowohl Seltenerd (SE)- als auch Uranionen im statistischen Mittel jeweils die Hälfte der Gitterplätze des kubischflächenzentrierten (fcc) Teilgitters ein. In einem solchen Kristallgitter des Fluorittypus sind die Seltenerd (SE)-, die Uran- und auch die Sauerstoffionen stark diffusiongehemmt, so dass die Bildung von $(SE_y, U_{1-y}) O_{2,00}$-Phasen mit y von 0 bis 1 aus dem Basispulver beim Sintern der Presslinge unterdrückt wird. Deshalb kann auch eine verhältnismässig hohe Dichte der aus den Presslingen gewonnenen oxidischen Kernbrennstoffsinterkörper unabhängig von den Eigenschaften des verwendeten $UO_2$-Basispulvers sogar mit verhältnismässig hohem Seltenerdoxidgehalt erzielt werden.

Besonders vorteilhaft ist es, wenn der Anteil des Seltenerdoxids, insbesondere des $Gd_2O_3$, in der zu kompaktierenden Pulvermischung 2 bis 15 Gew.-%, vorzugsweise 4 bis 8 Gew.-%, beträgt. In den gewonnenen Sinterkörpern hat dann der Anteil des Seltenerdoxids den gleichen Wert.

Die Erfindung und ihre Vorteile seien anhand von drei Ausführungsbeispielen näher erläutert:

Zum Vermischen mit dem Basispulver bestimmtes seltenerdoxidhaltiges Pulver kann vorteilhafterweise aus einem seltenerdoxidhaltigen Ausgangspulver mit einer $UO_2$-Beschichtung auf den Ausgangspulverpartikeln durch Glühen erzeugt werden. Zu diesem Zweck wird beispielsweise 50 g $Gd_2O_3$-Ausgangspulver, das sich in einer flachen Schale ausgebreitet befindet, mit Hilfe eines Aerosol-Sprühgerätes mit einer wässrigen Lösung aus Uranylnitrat, Uranylcitrat und/oder Uranyloxalat erforderlichenfalls wiederholt besprüht. Die Schale führt hierbei günstigerweise eine Rüttelbewegung aus, so dass infolge der Vibration der Pulverpartikel diese gleichmässig mit dem uranhaltigen Überzug versehen werden.

Anschliessend wird die Schale erwärmt und der uranhaltige Überzug auf den Pulverpartikeln getrocknet und gegebenenfalls von Kristallwasser befreit.

Hierauf wird das $Gd_2O_3$-haltige Pulver mit dem uranhaltigen Überzug auf den Pulverpartikeln in einer reduzierenden Wasserstoffatmosphäre bei 500°C bis 1000°C calziniert und dann für 2 bis 5 Stunden bei einer Temperatur von etwa 1500°C zur Ausbildung des Kristallgitters des Fluorittypus mit der stöchiometrischen Zusammensetzung $(SE_{0,5}, U_{0,5})$ $O_{2,00}$ zumindest an der Oberfläche der Pulverpartikel geglüht.

Das so erzeugte $Gd_2O_3$-haltige Pulver wird sodann mit 660 g des aus reinem $UO_2$ bestehenden Basispulvers, welches eine spezifische Oberfläche 6,5 $m^2/g$ und einen mittleren Kristallitdurchmesser 50 nm hat, gemischt und zu Presslingen kompaktiert, die 7 Gew.-% $Gd_2O_3$ enthalten. Diese Presslinge werden sodann in einer reduzierend wirkenden Wasserstoffatmosphäre 2 bis 5 Stunden lang auf eine Temperatur im Bereich von 1500°C bis 1750°C erhitzt. Die gewonnenen Sinterkörper haben eine Dichte, die 96,5% ihrer theoretischen Dichte ist.

Das zum Vermischen mit dem Basispulver bestimmte seltenerdoxidhaltige Pulver kann in günstiger Weise auch aus einer Mischung aus seltenerdoxidhaltigem Ausgangspulver und $UO_2$-Pulver durch Mahlen erzeugt werden.

Zu diesem Zweck werden z.B. $UO_2$- und $Gd_2O_3$-Pulver im Verhältnis von 60:40 Gew.-Teilen, was einem Molverhältnis von 50:50 entspricht, von Hand gemischt und anschliessend in einer Kugelmühle 8 bis 15 Stunden lang intensiv gemahlen. Als Mahlhilfsmittel wird dem Gemisch in der Kugelmühle 0,2 bis 50 g destilliertes Wasser, Propandiol und/oder Zinkstearat pro 500 g Gemisch als Mahlhilfsmittel zugesetzt.

Das Mahlgut wird nach dem Mahlen in einem Taumelmischer einer Aufbaugranulation unterzogen, wodurch rieselfähige Partikel entstehen, die mit Basispulver aus reinem $UO_2$ gut mischbar und kompaktierbar sind.

Nach dem Mischen von 100 g des granulierten Mahlgutes mit 700 g Basispulver aus reinem $UO_2$, welches eine spezifische Oberfläche 6,5 $m^2/g$ und einen mittleren Kristallitdurchmesser 50 nm hat, wird das Gemisch zu Presslingen mit 5 Gew.-% $Gd_2O_3$-Gehalt kompaktiert, die in einer reduzierend wirkenden Wasserstoffatmosphäre bei einer Temperatur von 1500°C bis 1750°C unter Ausbildung von Sinterkörpern 2 bis 5 Stunden lang gesintert werden. Während dieses Sinterns gehen die $UO_2$ und $Gd_2O_3$ enthaltenden Granulate zumindest an ihrer Oberfläche in das Kristallgitter des Fluorittypus mit der stöchiometrischen Zusammensetzung $(Gd_{0,5}, U_{0,5})$ $O_{2,00}$ über. Die gewonnenen Sinterkörper haben 5 Gew.-% $Gd_2O_3$-Gehalt und eine Sinterdichte von 97,2% ihrer theoretischen Dichte.

Das zum Vermischen mit dem Basispulver aus $UO_2$ bestimmte seltenerdoxidhaltige Pulver kann schliesslich in günstiger Weise auch durch gemeinsames Ausfällen aus einer Lösung erzeugt werden, in der Uran und die seltene Erde gelöst sind.

Zu diesem Zweck werden z.B. 60 g $UO_2$-Pulver und 40 g $GD_2$-$O_3$-Pulver, was einem Molverhältnis 50:50 entspricht, in Salpetersäure gelöst. Diese Lösung wird mit Ammoniumcarbonatlösung versetzt. Sodann werden in die Lösung Ammoniak ($NH_3$)- und Kohlendioxid ($CO_2$)-Gas gleichzeitig eingeleitet und ein Gadolinium und Uran enthaltender Niederschlag ausgefällt.

Dieser Niederschlag besitzt die molare Zusammensetzung aus Gadolinium und Uran im Verhältnis 1:1. Er wird bei einer Temperatur von 500°C bis 650°C in einer reduzierenden Wasserstoffatmosphäre calziniert. Die Pulverpartikel des sich ergebenden Pulvers haben ein Kristallgitter des Fluorittypus mit der stöchiometrischen Zusammensetzung $(U_{0,5}, Gd_{0,5})$ $O_{2,00}$. Dieses Pulver kann mit 344 g Basispulver aus reinem $UO_2$, welches eine spezifische Oberfläche 6,5 $m^2/g$ und einen mittleren Kristallitdurchmesser 50 nm hat, vermischt, kompaktiert und in einer reduzierend wirkenden Wasserstoffatmosphäre 2 bis 5 Stunden lang bei einer Temperatur im Bereich von 1500°C bis 1750°C gesintert werden. Die gewonnenen Sinterkörper haben 9 Gew.-% $Gd_2O_3$-Gehalt und eine Dichte von 97,5% ihrer theoretischen Dichte.

**Patentansprüche**

1. Verfahren zum Herstellen von oxidischen Kernbennstoffsinterkörpern durch Vermischen von Basispulver aus $UO_2$ oder $UO_2$ und $PuO_2$ und seltenerdoxidhaltigem d.h. $SE_2O_3$-haltigem, insbesondere $Gd_2O_3$-haltigem Pulver sowie anschliessendes Kompaktieren der Pulvermischung zu Presslingen und Verdichten dieser Presslinge durch Sintern in einer reduzierend wirkenden Gasatmosphäre bei einer Temperatur im Bereich von 1500°C bis 1750°C, dadurch gekennzeichnet, dass zum Vermischen mit dem Basispulver seltenerdoxidhaltiges Pulver erzeugt wird mit Pulverpartikeln, welche mindestens in einer Oberflächenschicht ein Kristallgitter des Fluorittypus mit der stöchiometrischen Zusammensetzung $(SE_{0,5}, U_{0,5})$ $O_{2,00}$ aufweisen und/oder beim Sintern bilden.

2. Verfahren nach Anspruch 1, dadurch gekennzeichnet, dass das seltenerdoxidhaltige Pulver aus einem seltenerdoxidhaltigen Ausgangspulver mit einer $UO_2$-Beschichtung auf den Ausgangspulverpartikeln durch Glühen erzeugt wird.

3. Verfahren nach Anspruch 1, dadurch gekennzeichnet, dass das seltenerdoxidhaltige Pulver aus einer Mischung aus seltenerdoxidhaltigem Ausgangspulver und $UO_2$-Pulver durch Mahlen erzeugt wird.

4. Verfahren nach Anspruch 1, dadurch gekennzeichnet, dass das seltenerdoxidhaltige Pulver durch gemeinsames Ausfällen aus einer Lösung erzeugt wird, in der Uran und die seltene Erde gelöst sind.

**Claims**

1. Process for the preparation of oxidic nuclear fuel sintered bodies by mixing base powder of $UO_2$ or $UO_2$ and $PuO_2$ and powder containing rare earth oxide, i.e. powder containing $SE_2O_3$, especially powder containing $Gd_2O_3$, as well as by finally compacting the powder mixture into moulded pieces and compressing these moulded pieces by sintering in a reducing gas atmosphere at a temperature in the region of 1500°C to 1750°C, characterised in that powder containing rare earth oxide to be mixed with the base powder is produced having powder particles which have and/or form during sintering, at least in a surface layer, a crystal lattice of the fluorite type havinge the stoichiometric structure $(SE_{0.5} U_{0.5}) O_{2.00}$.

2. Process according to claim 1, characterised in that the powder containing rare earth oxide is produced by roasting a starting powder containing rare earth oxide, having a $UO_2$ coating on the starting powder particles.

3. Process according to claim 1, characterised in that the powder containing rare earth oxide is produced from a mixture of starting powder containing rare earth oxide and $UO_2$ powder, by milling.

4. Process according to claim 1, characterised in that the powder containing rarer earth oxide is produced by co-precipitation from a solution in which uranium and the rare earth are dissolved.

**Revendication**

1. Procédé de fabrication de corps frittés oxydés en matière combustible nucléaire, par mélange d'une poudre de base en $UO_2$ ou $UO_2$ et $PuO_2$ et d'une poudre contenant un oxyde de terre rare, c'est-à-dire contenant $SE_2O_3$, et notamment $Gd_1O_3$, ainsi que par compactage ultérieur du mélange de poudres en comprimés et par densification de ces comprimés par frittage dans une atmosphère gazeuse réductrice, à une température comprise entre 1500°C et 1750°C, caractérisé en ce qu'il consiste, pour le mélange à la poudre de base, à produire une poudre contenant un oxyde de terre rare ayant des particules de poudre qui ont et/ou qui forment par frittage au moins dans une couche superficielle un réseau cristallin de type fluorite ayant la composition stoechiométrique $(SE_{0,5}, U_{0,5}) O_{2,00}$.

2. Procédé suivant la revendication 1, caractérisé en ce qu'il consiste à produire la poudre contenant de l'oxyde de terre rare par calcination d'une poudre de départ contenant un oxyde de terre rare et avec un enrobage en $UO_2$ sur les particules de poudre de départ.

3. Procédé suivant la revendication 1, caractérisé en ce qu'il consiste à produire la poudre contenant de l'oxyde de terre rare par broyage à partir d'un mélange d'une poudre de départ contenant un oxyde de terre rare et d'une poudre de $UO_2$.

4. Procédé suivant la revendication 1, caractérisé en ce qu'il consiste à produire la poudre contenant un oxyde de terre rare par co-précipitation dans une solution dans laquelle l'uranium et la terre rare sont dissous.